(19) Europäisches Patentamt
European Patent Office
Office européen des brevets

(11) EP 0 913 187 B1

(12) FASCICULE DE BREVET EUROPEEN

(45) Date de publication et mention de la délivrance du brevet: **29.01.2003 Bulletin 2003/05**

(51) Int Cl.[7]: **B01F 5/02**, B01F 5/20, C08F 2/00, B01J 19/00

(21) Numéro de dépôt: **98402490.1**

(22) Date de dépôt: **07.10.1998**

# (54) Procédé de polymérisation en continu avec micromelange des fluides réactifs

Verfahren zur kontinuierlichen Polymerisation mit einem Mikromischer für Reaktionsflüssigkeiten

Continuous polymerisation process with reactive fluids micromixer

(84) Etats contractants désignés:
**BE CH DE ES FR GB IT LI NL SE**

(30) Priorité: **28.10.1997 FR 9713502**

(43) Date de publication de la demande:
**06.05.1999 Bulletin 1999/18**

(73) Titulaire: **Atofina**
**92800 Puteaux (FR)**

(72) Inventeurs:
- **Marcarian, Xavier**
  **64110 Jurançon (FR)**
- **Navarro, Christophe**
  **64520 Bidache (FR)**
- **Falk, Laurent**
  **57170 Bioncourt (FR)**
- **Pla, Fernand**
  **54600 Villers les Nancy (FR)**

(74) Mandataire: **Luziau, Nelly**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**EP-A- 0 749 987**
**DE-A- 2 630 132**
**FR-A- 2 315 982**
**FR-A- 2 603 209**
**GB-A- 1 475 771**
**US-A- 3 830 638**
**US-A- 4 488 407**

- **PATENT ABSTRACTS OF JAPAN vol. 007, no. 043 (C-152), 19 février 1983 (1983-02-19) & JP 57 194033 A (MITSUBISHI JIDOSHA KOGYO KK;OTHERS: 02), 29 novembre 1982 (1982-11-29)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 913 187 B1

Printed by Jouve, 75001 PARIS (FR)

## Description

La présente invention concerne un procédé et un dispositif pour le micromélange de fluides en continu, conduisant à la polymérisation de monomère(s) et l'obtention d'homopolymères ou de copolymères.

Un bon micromélange de fluides en continu est recherché dans le cas de certaines réactions très rapides, ainsi que dans le cas où l'on désire homogénéiser rapidement deux ou plusieurs fluides miscibles ou non miscibles entre eux.

Le procédé et le dispositif selon l'invention sont utilisables notamment lorsque le micromélange joue un rôle important, par exemple, sur le rendement et les caractéristiques des produits. C'est le cas, en particulier, des réactions de cristallisation, précipitation, combustion et des réactions de polymérisation et copolymérisation.

L'invention est particulièrement utile pour les (co)polymérisations ultrarapides, conduisant à des (co)polymères ayant une masse et une polymolécularité contrôlées et, de préférence, à haut taux de solide ; c'est le cas, notamment, de la polymérisation anionique de monomères (méth)acryliques.

Le mélange de deux ou plusieurs fluides en un temps très court peut être nécessaire dans certaines circonstances et notamment lorsque ces fluides sont réactifs entre eux et que les cinétiques des réactions chimiques sont complexes et/ou rapides. Il convient donc, dans certains cas, de mélanger les réactifs jusqu'à l'échelle moléculaire (micromélange) en un temps plus court que le temps caractéristique de réaction.

Pour caractériser le micromélange, des réactions de type parallèles-concurrentes ou consécutives-concurrentes peuvent être utilisées en tant que réactions-tests.

C'est par exemple le cas lors des réactions parallèles-concurrentes, du type :

$$A + B \rightarrow R \qquad (1)$$

$$C + B \rightarrow S \qquad (2)$$

ou consécutives-concurrentes, du type :

$$A + B \rightarrow R \qquad (1')$$

$$B + R \rightarrow S \qquad (2')$$

dans lesquelles A, B et C sont des réactifs et R et S, des produits.

Dans le système de réactions parallèles-concurrentes, on mélange B en défaut stoechiométrique à un mélange contenant A et C. Dans le système de réaction consécutives-concurrentes, on mélange B en défaut stoechiométrique à A. En général, R est le produit recherché et S, un sous-produit. Dans les deux cas, les vitesses des réactions (1) et (1') sont plus grandes que celles des réactions respectivement (2) et (2').

La proportion de R et de S dépend de la qualité du micromélange entre A et B :

- si le micromélange est bon, c'est-à-dire si le temps caractéristique de micromélange est inférieur au temps caractéristique de la réaction (2) ou (2') suivant le cas, on ne formera pratiquement que R ;
- dans le cas contraire, si le micromélange est mauvais, c'est-à-dire si le temps caractéristique de micromélange est supérieur au temps caractéristique de la réaction (2) ou (2') suivant le cas, on formera aussi S. La quantité de S formée dépend alors à la fois du micromélange (moins bon est le micromélange, plus on formera de S) et de la stoechiométrie des réactions.

En général, si S est un sous-produit indésirable, on aura intérêt à favoriser un bon micromélange pour augmenter le rendement en R et, de cette façon, réduire les coûts de séparation entre R et S et éviter la formation d'un sous-produit S non valorisable.

Dans le cas des réactions de polymérisation vivante, c'est-à-dire une polymérisation, notamment sans ou pratiquement sans réactions de terminaison et/ou de transfert, le micromélange permet de contrôler la distribution des masses molaires. En effet, l'une des particularités de ce type de polymérisation réside dans le fait qu'il est possible d'obtenir des distributions de masses molaires très étroites, c'est-à-dire que toutes les chaînes macromoléculaires comportent pratiquement le même nombre de motifs de monomère. Cependant, cette condition n'est remplie que si, d'une part, la réaction d'amorçage a lieu rapidement avant que les réactions de propagation ne débutent, et, d'autre

part, les chaînes croissent simultanément. Des systèmes d'amorçage permettent de remplir la première condition de l'amorçage rapide. En revanche, seul un bon micromélange entre l'amorceur et le monomère permettra la croissance simultanée des chaînes macromoléculaires. Si le micromélange n'est pas bon, certaines chaînes commenceront à croître avant d'autres, ce qui, au final, provoquera l'élargissement de la distribution des masses molaires.

Actuellement, l'une des techniques les plus couramment utilisées pour mélanger deux ou plusieurs liquides consiste à utiliser une cuve fermée, semi-fermée ou ouverte, munie d'un agitateur mécanique de type hélice ou turbine ou autre, et à injecter un ou plusieurs des réactifs dans la cuve.

Grâce à l'énergie dissipée par l'agitation mécanique, le mélange pourra s'effectuer. Malheureusement, ces dispositifs ne permettent pas, dans certains cas, d'atteindre des temps de micromélange suffisamment faibles pour mettre en oeuvre des réactions rapides et complexes, et surtout, ils sont inadaptés au cas des réactions de polymérisation où la viscosité augmente rapidement au cours du temps.

Les mélangeurs statiques, placés en ligne dans une conduite ou à l'entrée d'un réacteur, permettent un bon mélange des liquides. Néanmoins, ils sont, la plupart du temps, utilisés en tant que pré-mélangeurs avant l'entrée dans un réacteur ou lorsque les contraintes de temps ne sont pas rédhibitoires. Ce sont de bons dispositifs pour homogénéiser des solutions, mais pas vraiment adaptés à certaines réactions de polymérisation, notamment les réactions rapides, car les risques de bouchage sont importants. C'est le cas, en particulier, des polymérisations à haut taux de solide.

Les mélangeurs à jets tangentiels (utilisables notamment pour la polymérisation anionique comme décrit dans EP-A-0749987) ou les têtes RIM (Reaction Injection Molding) sont des mélangeurs à jets confinés, c'est-à-dire à jets en contact avec la paroi du mélangeur. Ils sont très efficaces, mais engendrent des bouchages lorsque de hautes teneurs en polymères sont mises en jeu ou nécessitent l'injection des produits par des pompes résistant aux hautes pressions (plusieurs centaines de bars). De plus, les têtes RIM nécessitent un fonctionnement en discontinu.

Le mélange par impact de jets libres (c'est-à-dire sans contact des jets avec les parois du mélangeur) est connu, et a été décrit pour créer des émulsions ou dans des procédés d'extraction liquide-liquide, par exemple par Abraham TAMIR, "Impinging-Stream-Reactors. Fundamentals and Applications", Chap. 12 : Liquid-Liquid Processes, Elsevier (1994).

On a aussi décrit les dispositifs d'impact de jets libres pour la précipitation ou la polymérisation. Ils sont constitués de deux jets orientés suivant un angle donné et dont l'impact provoque un micromélange rapide ; cf. Amarjit J. Mahajan et Donald J. Kirwan "Micromixing Effects in a Two Impinging-Jets Precipitator, Aiche Journal, Vol. 42, n° 7, pages 1801-1814 (juillet 1996);Tadashi Yamaguchi, Masayuki Nozawa, Narito Ishiga et Akihiko Egastira "A Novel Polymerization Process by Means of Impinging Jets", Die Angewandte Makromolekulare Chemie 85 (1980) 197-199 (Nr 1311). L'inconvénient de ces systèmes est qu'ils ne permettent que le mélange de deux fluides et que les jets sont tous du même diamètre et, par conséquent, si l'on veut que le mélange soit efficace, les débits respectifs dans chaque jet doivent être tous égaux entre eux. Dans le cas d'une réaction de polymérisation, le monomère arrivant suivant un premier jet et la solution d'amorceur suivant un second jet de même débit que le premier, on voit donc que la quantité de solvant dans le système sera obligatoirement relativement importante, ce qui implique d'avoir à envisager des opérations de recyclage, généralement coûteuses, en aval du procédé de polymérisation.

La présente invention a donc pour but un procédé de polymérisation comprenant un micromélange en continu, par impact de jets libres, ne comportant plus les limitations qui viennent d'être décrites, ainsi qu'un dispositif pour la mise en oeuvre de ce procédé.

Le procédé selon l'invention, pour préparer en continu des homopolymères ou des copolymères par micromélange par impact de jets libres de fluides formés (1) de monomère(s) et (2) d'un système d'amorçage est caractérisé en ce que l'on micromélange lesdits fluides (1) et (2) et en ce que l'on récupère le mélange de ces fluides sous forme d'un jet résultant Jr, issu du point d'impact (I), le micromélange étant obtenu :

a) en formant au moins un groupe d'au moins deux jets Ja desdits fluides identiques ou différents, concourant au point d'impact (I), les jets Ja d'un même groupe étant tous de géométrie identique, leurs axes étant disposés de telle sorte que leurs projections sur un plan perpendiculaire à l'axe (A) du jet résultant Jr soient réparties angulairement de manière régulière et ces axes étant inclinés par rapport audit axe (A) d'un même angle $\alpha$ non nul d'au plus 90° ;
b) en dirigeant, simultanément, sur le point d'impact (I) au moins un jet Jb d'un fluide différent d'au moins un des fluides desdits jets Ja pour former le jet résultant Jr, l'axe du ou des jets Jb étant inclinés par rapport à l'axe du jet résultant Jr d'un angle $\beta$ inférieur à l'angle $\alpha$ ; et
c) en récupérant le mélange des fluides des jets Ja et Jb sous forme du jet résultant Jr constitué par les homopolymères ou copolymères.

On dispose, de préférence, les jets Ja et Jb pour que le jet résultant Jr, issu du point d'impact (I), ait une direction verticale, orientée vers le bas.

Par "géométrie", on entend la forme des jets Ja et Jb qui peuvent se présenter sous la forme de cylindre, cône, nappe, etc. De préférence, les jets sont cylindriques et ont une section de diamètre compris, par exemple, entre 0,01 mm et 100 mm, et, de préférence, entre 0,1 mm et 10 mm. Les jets Ja et Jb peuvent avoir la même forme géométrique.

Par point d'impact, on entend la zone de contact initial entre tous les jets.

L'angle $\alpha$ est de préférence de 10 à 60° ; l'angle $\beta$ est de 0 à 89°. L'angle $\beta$ est de préférence 0°. La direction du jet unique Jb est alors confondue avec celle du jet résultant Jr.

Suivant un mode de réalisation, schématisé à la figure 1, on forme un groupe de deux jets Ja et un jet Jb, ces jets concourant en un point d'impact (I) pour former le jet résultant Jr. L'axe du jet Jb correspond à l'axe (A) du jet résultant Jr servant d'axe de symétrie pour les jets Ja. Bien entendu, le groupe peut comprendre plus de deux jets Ja.

Suivant un autre mode de réalisation, schématisé à la figure 2, on forme un premier groupe de jets $Ja_1$, un deuxième groupe de jets $Ja_2$ et un jet Jb, tous les jets concourant en un point d'impact (I) pour former un jet résultant Jr servant d'axe de symétrie pour les jets $Ja_1$ et $Ja_2$ qui font, avec cet axe, des angles $\alpha1$ et $\alpha2$ respectivement.

Selon un mode de réalisation, on dirige sur le point d'impact (I) un groupe d'au moins deux jets Jb de fluides identiques ou différents, les jets Jb étant tous de géométrie identique, leurs axes étant disposés de telle sorte que leurs projections sur un plan perpendiculaire à l'axe (A) du jet résultant Jr soient réparties angulairement de manière régulière et ces axes étant inclinés par rapport audit axe (A) d'un même angle $\beta$.

Un tel mode de réalisation est schématisé à la figure 3 où l'on forme un groupe de deux jets Ja et un groupe de deux jets Jb, concourant en un point d'impact (I) pour former le jet résultant Jr, ce dernier servant d'axe de symétrie pour les jets Ja et Jb. Bien entendu, chaque groupe peut comprendre plus de deux jets.

Selon un autre mode de réalisation, le jet Jr peut être utilisé comme l'un des jets Ja ou Jb pour réaliser un autre micromélange dans une étape en aval ; avantageusement, le jet Jr est utilisé comme jet Jb dans le micromélange en aval, comme schématisé par exemple à la figure 4.

Dans tous les cas, les jets d'un même groupe ont tous la même géométrie et sont constitués de fluides identiques ou différents du moment qu'au moins un des jets Jb est formé d'un fluide différent d'un des fluides des jets Ja.

Dans un même groupe de jets, $J_a$ ou $J_b$, les débits de ces jets sont identiques.

Les débits des jets Ja et Jb peuvent être identiques.

On préfère un mode de réalisation dans lequel le ou les jet(s) Jb ont un débit différent de celui d'au moins un groupe de jets Ja.

Le débit des fluides dans chacun des jets Ja et Jb est, par exemple, de 1g/h à 10 000 kg/h, en particulier de 1 kg/h à 1000 kg/h.

Le procédé de micromélange selon l'invention peut permettre d'autres réactions que la réaction de polymérisation ou copolymérisation, par exemple une réaction de cristallisation, de précipitation ou de combustion.

Les fluides sont généralement des liquides. Les fluides peuvent être des fluides susceptibles de réagir entre eux ou contenir des composants susceptibles de réagir entre eux. Si la réaction est rapide, elle débute pratiquement au point d'impact (I).

Le procédé selon la présente invention est avantageusement réalisé dans une enceinte agencée poùr la récupération du jet résultant Jr, ladite enceinte pouvant être réglée en température et en pression. Ainsi, la pression régnant dans l'enceinte peut être de 1mbar à 3000 bars, en particulier de 0,1 à 100 bars, et la température, de -100°C à 1500°C, en particulier de -80°C à + 200°C.

La (co)polymérisation résultant du micromélange de fluides formés de monomère(s) et d'un système d'amorçage, conduit à la formation d'homopolymères, de copolymères statistiques et de copolymères séquencés.

Les monomères peuvent être purs ou en milieu solvant aprotique, polaire ou non polaire.

Les jets Ja sont avantageusement des jets de monomères purs ou en milieu solvant et le ou les jets Jb, des jets de système d'amorçage.

En particulier, dans le cas de préparation d'homopolymères, les jets Ja (par exemple selon les schémas des figures 1 et 3) sont constitués de monomères et le ou les jets Jb du système d'amorçage. Le polymère est récupéré dans le jet résultant Jr.

Dans le cas d'une copolymérisation statistique (réalisée par exemple selon le schéma de la figure 2), les jets Ja1 sont formés de monomère $M_1$ et les jets Ja2 de monomères $M_2$ et le copolymère est récupéré dans le jet Jr.

Eventuellement, pour obtenir un copolymère statistique, on peut utiliser aussi un procédé schématisé aux figures 1 ou 3, dans lesquelles un jet Ja peut comprendre un mélange de monomères $M_1$ et $M_2$ ou bien un des jets Ja est constitué par le monomère $M_1$ et l'autre jet Ja par le monomère $M_2$.

Pour préparer des copolymères séquencés, on peut utiliser un procédé schématisé par exemple à la figure 4, dans laquelle les jets Ja sont formés de monomère M et le jet Jb de système d'amorçage. Le jet résultant Jr est formé par le polymère vivant et sert d'amorceur pour la polymérisation du monomère M' des jets Ja', polymérisation qui fait suite au micromélange au point d'impact (I') des jets Jr et des jets Ja' ; le copolymère séquencé est récupéré dans le jet résultant Jr'.

Pour obtenir des copolymères séquencés, on peut aussi utiliser un procédé schématisé aux figures 1 à 3, dans lesquelles le ou les jets Jb sont constitués par un amorceur sous forme de polymère vivant.

Il est aussi possible qu'un jet Ja soit constitué de monomère(s) et un autre jet ja soit formé du système d'amorçage du moment, comme indiqué précédemment, que tous les jets de ce groupe aient la même géométrie. Dans ce cas, le jet Jb peut être constitué de monomère(s).

L'intérêt du procédé de l'invention est le fait de pouvoir obtenir ces polymères sans bouchage du réacteur avec éventuellement un taux élevé de solide et une quantité réduite en solvant.

Les monomères que l'on peut (co)polymériser sont notamment ceux indiqués dans le document EP-A-749987. Ce sont des monomères acryliques, méthacryliques, vinylaromatiques, diéniques, maléimides.

Les monomères méthacryliques et acryliques sont, par exemple, ceux répondant aux formules suivantes :

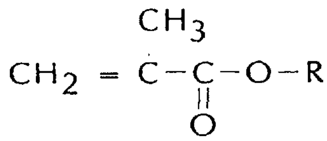

et

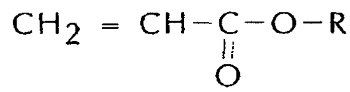

dans laquelle R est choisi parmi les radicaux alkyle en $C_1$-$C_{18}$, linéaires ou ramifiés, primaires, secondaires ou tertiaires, cycloalkyle en $C_5$-$C_{18}$, (alcoxy en $C_1$-$C_{18}$)-alkyle en $C_1$-$C_{18}$, (alkylthio en $C_1$-$C_{18}$)-alkyle en $C_1$-$C_{18}$, aryle et arylalkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés ; les (méth) acrylates de glycidyle, de norbornyle, d'isobornyle, les mono- et di-(alkyl en $C_1$-$C_{18}$)-(méth)acrylamides.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

Le terme "maléimide", tel qu'employé ci-dessus, désigne un monomère maléimide non substitué ou un monomère maléimide N-substitué de formule :

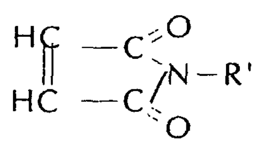

dans laquelle R' est un radical alkyle, arylalkyle, aryle ou alkylaryle ayant de 1 à 12 atomes de carbone. Des exemples non limitatifs sont : le N-éthyl-maléimide, le N-isopropylmaléimide, le N-n-butylmaléimide, le N-isobutylmaléimide, le N-tert.-butylmaléimide, le N-n-octylmaléimide, le N-cyclohexylmaléimide, le N-benzylmaléimide et le N-phénylmaléimide. Le maléimide préféré est le N-cyclohexylmaléimide.

Par monomères vinylaromatiques, on entend un monomère aromatique à insaturation éthylénique tel que styrène, vinyltoluène, alphaméthylstyrène, méthyl-4-styrène, méthyl-3-styrène, méthoxy-4-styrène, éthyl-4-styrène, diméthyl-3,4-styrène, tert.butyl-3-styrène, dichloro-2,4-styrène, dichloro-2-6-styrène, vinyl-1-naphtalène, vinyl-2-pyridine et vinyl-4-pyridine.

Par monomère diénique, en entend un diène choisi parmi les diènes linéaires ou cycliques, conjugués ou non conjugués comme par exemple le butadiène, l'isoprène, le 1,3-pentadiène.

Un mode de réalisation particulièrement intéressant est la polymérisation ou la copolymérisation par voie anionique dans laquelle un des monomères est un monomère acrylique ou méthacrylique comme le méthacrylate de méthyle.

Le système d'amorçage peut être une solution d'au moins un amorceur ou bien une solution d'au moins un amorceur et d'au moins un additif tel qu'un ligand. Dans le cas d'une copolymérisation séquencée, l'amorceur peut être un polymère ou copolymère vivant, le cas échéant en milieu solvant, éventuellement associé à un additif tel qu'un ligand.

L'amorceur, qui peut être monofonctionnel ou difonctionnel, et le ligand peuvent être tout composé connu et peuvent, en particulier, être choisis parmi ceux décrits dans EP-A-749987. Le contenu du document EP-A-749987 est incorporé ici par référence.
Comme amorceur, on peut utiliser un amorceur monofonctionnel de formule générale (I) :

$$R^1\text{-}M$$

dans laquelle :

- M désigne un métal alcalin ou alcalino-terreux, et
- $R^1$ désigne :
  - un radical alkyle à chaîne droite ou ramifiée, contenant 2 à 6 atomes de carbone, ou
  - un radical aryle à un ou plusieurs cycles, éventuellement substitué, ou
  - un radical alcényle en $C_2$-$C_6$ substitué par aryle ou alkylaryle, ou
  - un radical alkyle, linéaire ou ramifié, contenant 1 6 atomes de carbone, substitué par au moins un groupe phényle,

ou un amorceur monofonctionnel anionique des (méth)acrylates choisi parmi les α-lithioisobutyrates et les amidures,
ou bien un amorceur bifonctionnel de formule (II)

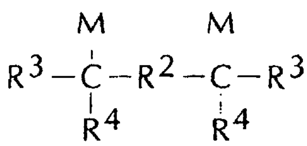
(II)

dans laquelle :

- M est tel que défini ci-dessus, et
- $R^2$ représente un radical organique divalent, aliphatique, cycloaliphatique, aromatique ou comportant au moins un groupement cycloaliphatique ou aromatique, $R^2$ pouvant comporter des substituants, et
- $R^3$ et $R^4$ représentent chacun indépendamment un radical organique monovalent, aliphatique, cycloaliphatique, aromatique ou comportant au moins un groupement cycloaliphatique ou aromatique, $R^3$ et $R^4$ pouvant comporter des substituants.

A titre d'exemples d'amorceurs monofonctionnels de formule (I), on peut citer le sec.-butyllithium, le n-butyllithium, le fluorényllithium, l'alphaméthylstyryllithium, le 1,1-diphénylhexyllithium (DPHLi), le diphénylméthyllithium ou -sodium ou -potassium et le 1,1-diphényl-3-méthylpentyl-lithium.
A titre d'exemples d'amorceurs difonctionnels de formule (II), on peut citer le 1,1,4,4-tétraphényl-1,4-dilithiobutane, le 1,1,4,4-tétraphényl-1,4-disodiobutane.
On peut aussi utiliser des précurseurs d'amorceurs difonctionnels bien connus, comme le naphtalène lithium, le naphtalène sodium, le naphtalène potassium et leurs homologues.
Par ailleurs, on peut associer à l'amorceur tel que défini ci-dessus au moins un ligand constitué par un alcoolate de métal alcalin de formule (III) ou (IV) :

$$R^5(OR^6)_nOM^1 \qquad (III)$$

$$M^1(OR^6)_nOM^1 \qquad (IV)$$

dans laquelle :

- $M^1$ représente un métal alcalin ;

- $R^5$ est un radical alkyle, linéaire ou ramifié, ayant de 1 à 6 atomes de carbone ou un radical arylalkyle dans lequel le reste alkyle est en $C_1$-$C_6$ ou un radical alkylaryle dans lequel le groupe alkyle a de 1 à 6 atomes de carbone ;
- $R_6$ est un radical alkylène, linéaire ou ramifié, ayant de 2 à 4 atomes de carbone ;
- n est le nombre entier 1, 2 ou 3.

Comme exemples de tels alcoolates, on peut citer ceux dans lesquels le radical $R^5$ est un radical méthyle, éthyle, butyle et benzyle, $R^5$ étant avantageusement le radical méthyle, et $R^6$ est le radical éthylène, propylène, butylène, isopropylène, $R^6$ étant de préférence le radical éthylène. $M^1$ est le lithium, le sodium ou le potassium, et représente, de préférence, le lithium.

Des exemples particuliers sont les suivants :

- $CH_3(OCH_2CH_2)OLi$
- $CH_3(OCH_2CH_2)_2OLi$
- $CH_3(OCH_2CH_2)_3OLi$
- $nBu(OCH_2CH_2)_2OLi$
- $Et(OCH_2CH_2)_2OLi$
- $Li(OCH_2CH_2)_2OLi$
- $Li(OCH_2CH_2)_3OLi$

Les alcoolates des formules (III) et (IV) sont préparés, par exemple, par réaction respectivement de $R^5(OR^6)_nOH$ ou $H(OR^6)_nOH$ avec toute base dont le pKa est supérieur au pKa du couple $R^5(OR^6)_nOM^1/R^5(OR^6)_nOH$ ou du couple $M^1(OR^6)_nOM^1/H(OR^6)_nOH$. Ainsi, les alcoolates de lithium peuvent être préparés par réaction avec du lithium métallique ou par réaction avec un composé organométallique de lithium en solvant polaire ou apolaire.

En association à un ligand alcoolate tel que ceux décrits précédemment, on peut utiliser, pour former le système d'amorçage, un amorceur silylé monofonctionnel ou difonctionnel tel que les composés suivants :

a) amorceur monofonctionnel de formule :

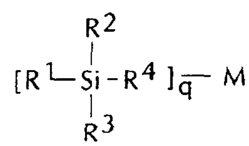

dans laquelle :

- $R^1$, $R^2$, $R^3$ représentent, chacun, indépendamment, un radical alkyle, linéaire ou ramifié, contenant 1 à 8 atomes de carbone ;
- $R^4$ représente un radical alkylène linéaire ou ramifié, contenant 1 à 8 atomes de carbone ;
- M désigne un métal alcalin ou alcalino-terreux (valence q de 1 ou 2).

b) amorceur silylé difonctionnel de formule :

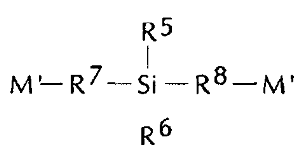

dans laquelle :

- $R^5$ et $R^6$ représentent, chacun, indépendamment, un radical alkyle, linéaire ou ramifié, contenant 1 à 8 atomes de carbone ;
- $R^7$ et $R^8$ représentent, chacun, indépendamment, un radical alkylène, linéaire ou ramifié, contenant 1 à 8 atomes de carbone ; et
- M' désigne un métal alcalin.

Dans les formules ci-dessus, $R^1$, $R^2$, $R^3$, $R^5$ et $R^6$ représentent, chacun, de préférence, un radical alkyle ayant de préférence de 1 à 4 atomes de carbone et tout particulièrement un radical méthyle ; $R^4$, $R^7$ et $R^8$ représentent, chacun, de préférence, un radical alkylène ayant 1 ou 2 atomes de carbone et particulièrement le radical méthylène, et M et M' représentent, chacun, de préférence le lithium. Un amorceur particulièrement approprié est le triméthylsilylméthyllithium.

Le rapport molaire du ligand de formule (III) ou (IV) à l'amorceur dans le système d'amorçage tel que défini ci-dessus peut varier dans les limites très larges. la quantité de ligand (III) ou (IV) doit être suffisante pour permettre la formation d'un complexe avec le centre actif de polymérisation et ainsi stabiliser ce dernier. La quantité de ligand (III) ou (IV) dépend de l'amorceur choisi et des monomères à (co)polymériser. Le rapport molaire ligand (III) ou (IV)/ amorceur est généralement compris entre 1 et 50. Pour l'obtention de meilleurs résultats, ce rapport est compris, de préférence, entre 1 et 10.

Le ou les monomère(s) peuvent être en solution dans au moins un solvant polaire ou non polaire, choisi parmi les solvants aromatiques, tels que le benzène, le toluène, l'éthylbenzène ou les solvants tels que le tétrahydrofuranne, le diglyme, le tétraglyme, l'ortho-terphényle, le biphényle, la décaline, la tétraline ou le diméthylformamide. L'amorceur et le ligand sont en solution dans un solvant du même type.

Les monomères sont utilisés par exemple purs ou en solution en concentration de 10 à 90 % en monomère ; les monomères sont utilisés de préférence purs.

Les (co)polymères formés par polymérisation anionique dans le jet résultant Jr sont vivants, c'est-à-dire qu'ils peuvent amorcer une nouvelle polymérisation si une quantité de monomère est ajoutée. Pour obtenir des (co)polymères à partir de ces (co)polymères vivants, on peut désactiver ces derniers par réaction avec une source de protons (par exemple, alcool, eau, acide protonique).

Pour la réalisation du micromélange selon l'invention, conduisant en particulier à un (co)polymère par voie anionique, le rapport entre le débit pondéral global des jets Ja constitués par les monomères et le débit pondéral du jet Jb ou le débit pondéral global des jets Jb (comprenant le système d'amorçage) peut être de 0,01 à 100, de préférence de 1 à 20. Ce rapport est de préférence constant.

L'angle d'impact entre l'axe des jets de monomères et l'axe du jet résultat Jr est inférieur à 90°, de préférence compris entre 10 et 60° et tout particulièrement entre 30 et 45°.

La durée du micromélange est la plus faible possible et est inférieure au temps de (co)polymérisation pour éviter une propagation non simultanée des chaînes, ce qui conduirait à un mauvais contrôle de la polymérisation. La durée est généralement d'au moins 0,001 s, en particulier de 0,005 à 10 s.

La température, au point d'impact (I), est de l'ordre de - 100°C à + 200°C et, de préférence, de - 80°C à + 100°C.

De préférence, la polymérisation a lieu dans des conditions adiabatiques.

La présente invention concerne aussi un dispositif pour la mise en oeuvre du procédé de polymérisation défini précédemment.

Le dispositif, selon l'invention, sert à micromélanger en continu par impact de jets libres, au moins deux fluides monomère(s) et système d'amorçage et à récupérer le mélange polymère sous forme d'un jet résultant Jr. Il comprend :

a) des moyens pour former au moins un groupe d'au moins deux jets Ja, de fluides identiques ou différents, concourant en un point d'impact (I), les jets d'un même groupe ayant tous la même géométrie, leurs axes étant disposés de telle sorte que leurs projections sur un plan perpendiculaire à l'axe (A) du jet résultant Jr soient réparties angulairement de manière régulière et ces axes étant inclinés par rapport audit axe (A) d'un même angle $\alpha$ non nul d'au plus 90°,

b) des moyens pour diriger sur le point d'impact (I) au moins un jet Jb d'un fluide différent d'au moins un des fluides desdits jets Ja pour former un jet résultant Jr, l'axe du ou des jets Jb étant incliné(s) par rapport à l'axe (A) d'un angle $\beta$ inférieur à l'angle $\alpha$, et

c) des moyens pour récupérer le mélange des fluides des jets Ja et Jb sous forme du jet résultant Jr.

En particulier, le dispositif comprend, comme moyens pour former les jets Ja et Jb, des buses en nombre égal au nombre des jets Ja et Jb, ces buses étant fixées sur un porte-buses et raccordées, à l'entrée, à des tubulures d'arrivée de fluide et étant disposées et orientées pour permettre à leur sortie, la formation de jets libres Ja et Jb et leur point d'impact (I) et, comme moyens pour récupérer le mélange, une enceinte associée au porte-buses. Des moyens sont prévus pour assurer les débits nécessaires des jets Ja et Jb.

Les buses sont avantageusement amovibles pour permettre leur échange par des buses de géométrie différente. Ainsi, les buses peuvent être constituées par des tubes de diamètre variable ou dont l'extrémité de sortie est de diamètre intérieur variable, ou sur lesquels peuvent s'adapter des têtes de distribution de diamètre de sortie variable.

Pour la polymérisation, le dispositif est destiné au micromélange de fluides susceptibles de réagir entre eux et l'enceinte forme avec le porte-buses un réacteur comportant des moyens de réglage de la température et de la

pression. L'enceinte est avantageusement cylindrique avec un fond par exemple conique permettant la récupération du jet Jr.

Dans le cas où le jet Jr est utilisé comme jet Jb dans une nouvelle opération de micromélange en aval, on prévoit avantageusement que ce porte-buses et cette enceinte forment un premier module, un second porte-buses étant prévu sur la sortie de ladite enceinte (ledit second porte-buses comportant, au lieu de la buse normalement associée audit jet Jb, un orifice permettant le passage du jet Jr) et une seconde enceinte étant associée audit second porte-buses pour former un second module, d'autres modules de même type pouvant être prévus le cas échéant.

Il va de soi que le dispositif de l'invention et ses éléments constitutifs sont réalisés dans des matériaux compatibles avec les fluides véhiculés.

On va maintenant décrire, à titre illustratif et non limitatif, deux modes de réalisation d'un dispositif selon la présente invention, avec référence aux figures annexées :

- la figure 5 est une vue en coupe axiale d'un micromélangeur conforme à un premier mode de réalisation de l'invention ;
- la figure 6 est une vue de dessus, selon la flèche F de la figure 5 ; et
- la figure 7 est une vue en coupe axiale d'un micromélangeur conforme à un second mode de réalisation de l'invention (selon le schéma de la figure 4).

Le micromélangeur représenté sur les figures 5 et 6 comprend un élément porte-buses (1) qui comporte une paroi cylindrique (2) raccordée à une paroi cylindrique (3) de plus petite épaisseur et de plus petit diamètre par un épaulement tronconique (4), la paroi cylindrique (3) étant, à son extrémité opposée à l'épaulement (4), fermée par un fond circulaire (5). A son extrémité libre opposée à ce fond circulaire, la paroi cylindrique (2) est repliée d'équerre vers l'extérieur pour former une bride (6).

Dans l'épaulement tronconique (4), sont pratiqués quatre orifices cylindriques (7), qui sont régulièrement espacés et dont l'orientation est telle que leurs axes se coupent, en un point situé sur l'axe du porte-buses (1), côté intérieur. Dans l'exemple représenté, l'axe d'un orifice (7) forme un angle de 30° avec l'axe du porte-buses (1).

Dans chaque orifice (7) et selon l'axe de celui-ci, est engagé et maintenu, par emmanchement à force, un tube (8), lequel, une fois monté, dépasse à la fois extérieurement et intérieurement. Les parties extérieures servent à raccorder des tubulures d'arrivée de fluide et les parties intérieures présentent, par exemple, un filetage externe pour recevoir une tête de distribution (9).

Chaque tête de distribution (9), constituant une buse de distribution latérale avec le tube (8) associé, comporte une paroi cylindrique (9a) intérieurement muni de moyens de fixation au tube (8), par exemple un taraudage destiné à coopérer avec le filetage du tube (8), la paroi cylindrique (9a) étant raccordée à un fond (9b) comportant un orifice axial (9c) de sortie du fluide. En disposant d'un jeu de têtes de distribution (9) avec différents diamètres des orifices (9c), on peut faire varier le diamètre des jets de fluide Ja sortant des quatre buses de distribution latérales.

Le fond circulaire (5) comporte, en son centre, un orifice cylindrique (10) dans lequel est emmanché à force un tube (11) qui comporte au voisinage de l'une de ses extrêmités une bride (12), laquelle, en position de montage, vient s'appliquer contre la paroi externe du fond (5). Cette bride (12) comporte quatre orifices (12a), régulièrement répartis, pour le passage de vis (13) permettant la fixation du tube (11) sur le porte-buses (1). Le fond (5) comporte également une gorge (14) circulaire, centrée sur l'axe de l'orifice (10), dans l'espace intérieur des trous de passage des vis (13), cette gorge (14) recevant un joint d'étanchéité (non représenté).

De la même façon que les tubes (8), le tube (11), une fois monté sur le porte-buses (1), comporte une partie extérieure, dépassant de la bride (12), pour le raccordement d'une tubulure d'arrivée de fluide, et une partie intérieure qui dépasse du fond (5) et dont la paroi interne est de plus petit diamètre (11a) dans sa partie d'extrémité. Il est ainsi constitué une buse de distribution axiale d'un jet Jb de fluide, lequel, en fonctionnement, rencontrera les jets latéraux Ja au point d'impact (I) pour se prolonger suivant un jet axial résultant Jr.

En disposant d'un jeu de tubes (11) avec différents diamètres de sortie (11a), on peut faire varier le diamètre du jet de fluide Jb. Par ailleurs, il va de soi que l'on pourrait, suivant une variante, envisager d'adapter sur l'embouchure interne du tube (11), une tête de distribution analogue aux têtes de distribution (9) associées aux tubes latéraux (8). De la même façon, pour la variation du diamètre de sortie des buses latérales, on pourrait envisager des jeux de tubes (8) ayant différents diamètres d'extrémité de sortie.

La bride (6) du porte-buses (1) comporte quatre ouvertures (15), régulièrement réparties, pour le passage de la vis (16) permettant la mise en place du porte-buses (1) sur la collerette supérieure (17a) d'une enceinte (17) de forme générale tubulaire, de même axe que l'élément porte-buses (1).

Le jet axial résultant Jr, s'écoulant selon l'axe de cette enceinte, est le siège de la réaction entre les fluides parfaitement mélangés au point d'impact (I). Le produit de la réaction est alors récupéré dans le fond de l'enceinte (17), laquelle peut comporter des moyens de mise sous pression et des moyens de chauffage ou de refroidissement, ainsi que des moyens pour régler la température et la pression régnant à l'intérieur de celle-ci, selon la réaction considérée.

Sur la figure 7, est représenté schématiquement un appareillage conforme à un second mode de réalisation de la présente invention, lequel est sensiblement identique à celui décrit avec référence aux figures 5 et 6 (dont les éléments constitutifs, qui ne seront pas décrits à nouveau, sont désignés par les mêmes chiffres de référence), l'enceinte (17) coopérant, à sa partie inférieure, avec un second porte-buses (101).

Le porte-buses (101) est identique au porte-buses (1), excepté que son fond (105) ne porte pas de tube (111) et se prolonge latéralement suivant une semelle circulaire périphérique (105a), sur laquelle vient s'appuyer une collerette inférieure (17b) de l'enceinte (17), en vue de la fixation par vissage de ce dernier et du porte-buses (101) ; (les éléments constitutifs du porte-buses (101) sont désignés avec les mêmes chiffres de référence que ceux du porte-buses (1), auxquels on a ajouté 100).

Dans ce cas, en fonctionnement, le jet Jr traverse l'orifice (110) pratiqué dans le fond (105) pour venir se mélanger au point d'impact (I') dans l'enceinte (117) avec des jets latéraux Ja' d'un fluide destiné à se combiner ou à réagir avec le produit du jet Jr, les jets latéraux Ja' étant formés de la même façon que les jets latéraux Ja. Le jet résultant Jr' pourrait lui-même constituer un nouveau jet axial de mélange avec de nouveaux jets latéraux.

Les exemples suivants illustrent la présente invention, sans toutefois en limiter la portée. Le méthacrylate de méthyle (MMA) utilisé dans ces exemples est purifié par passage sur tamis moléculaire, puis sur alumine ; le toluène et le tétrahydrofuranne (THF) sont purifiés sur un tamis moléculaire.

*Exemple 1* :

**Polymérisation anionique en continu du MMA à l'aide d'un micromélangeur à impact de jets libres.**

Dans un stockeur C1, d'une capacité de 30 l et maintenu sous atmosphère inerte à - 21°C, on introduit 20 kg de MMA pur.

Dans un stockeur C2, d'une capacité de 30 l et maintenu sous atmosphère inerte à - 23°C, on prépare une solution d'amorçage en introduisant tout d'abord le solvant purifié, à savoir 17,50 kg d'un mélange de toluène et de tétrahydrofuranne dans un rapport massique 88 : 12, puis en ajoutant :

- 304,40 g (315,40 ml) de méthoxy-2-éthanol,
- 2 ml de 1,1-diphényléthylène (DPE) (indicateur coloré), et
- 2,5 l d'une solution 1,6 M de butyllithium dans l'hexane

afin de préparer le ligand $CH_3—O—CH_2CH_2—OLi$ par réaction de 4 moles de $CH_3—O—CH_2CH_2OH$ avec 4 moles de BuLi en présence de l'indicateur coloré DPE ; puis en ajoutant :

- 173,04 g (169,48 ml) de DPE, et
- 0,5 l d'une solution 1,6 M de BuLi dans l'hexane,

afin de préparer l'amorceur dont la concentration, dans le stockeur C2, est de 3,39 x $10^{-2}$ mole/l.

Le MMA et la solution d'amorçage contenus respectivement dans les stockeurs C1 et C2 sont pompés et amenés à passer d'abord dans un échangeur qui permet d'obtenir une température de mélange de - 25°C, puis dans un micromélangeur du type de celui décrit aux figures 5 et 6, dans lequel le monomère est introduit avec un débit total de 81 kg/h suivant les quatre jets latéraux Ja (soit 20,25 kg/h dans chaque jet) ; les jets Ja sont inclinés chacun d'un angle de 45° par rapport à la verticale et émergent de la tête de distribution (9) dont le diamètre est de 2 mm ; la solution d'amorçage est introduite avec un débit de 18 kg/h suivant le jet axial vertical Jb émergeant de la tête de distribution (11) dont le diamètre est de 1,5 mm.

La distance parcourue par les jets Ja entre la sortie des têtes de distribution (9) et le point d'impact (I) est de 30 mm, et celle parcourue par le jet Jb entre la sortie du tube (11) et le point d'impact (I) est de 40 mm.

L'enceinte tubulaire (17) associée à l'élément porte-buses (1) forme le réacteur de polymérisation dans lequel la pression est maintenue à 1 bar absolu d'azote, et la température à 20°C.

Au point d'impact (I), la concentration en MMA est de 7,38 mole/l et la concentration en amorceur, de 7,38 x $10^{-3}$ mole/l. La durée du micromélange est d'environ 5 ms. La polymérisation du MMA a lieu au sein du jet résultant Jr qui parcourt une distance de 500 mm jusqu'au fond conique de l'enceinte (17), où la solution de PMMA, qui contient 41 % en poids d'extrait sec, est récupérée.

Le PMMA a une $\overline{Mn}$ de 65600 g/mole.

*Exemple 2* :

**Polymérisation anionique en continu du MMA à l'aide d'un micromélangeur à impact de jets libres.**

Dans un stockeur C1, d'une capacité de 30 l et maintenu sous atmosphère inerte à -24°C, on introduit 20 kg de MMA pur.

Dans un stockeur C2, d'une capacité de 30 l et maintenu sous atmosphère inerte à - 34°C, on prépare une solution d'amorçage en introduisant tout d'abord le solvant purifié, à savoir 7,90 kg d'un mélange de toluène et de tétrahydrofuranne dans un rapport massique 88 : 12, puis en ajoutant :

- 253,67 g (262,87 ml) de méthoxy-2-éthanol,
- 2 ml de 1,1-diphényléthylène (DPE) (indicateur coloré), et
- 2,083 l d'une solution 1,6 M de BuLi dans l'hexane

afin de préparer le ligand $CH_3—O—CH_2CH_2—OLi$ comme à l'exemple 1, puis en ajoutant :

- 144,20 g (141,23 ml) de DPE, et
- 0,42 l d'une solution 1,6 M de BuLi dans l'hexane

afin de préparer l'amorceur dont la concentration dans le stockeur C2 est de 5,55 x $10^{-2}$ mole/l.

Le MMA et la solution d'amorçage contenus respectivement dans les stockeurs C1 et C2 sont pompés et amenés à passer d'abord dans un échangeur qui permet d'obtenir une température de mélange de - 26°C, puis dans un micromélangeur du type de celui décrit aux figures 5 et 6, dans lequel le monomère est introduit avec un débit total de 80 kg/h suivant les quatre jets latéraux Ja (soit 20 kg/h dans chaque jet) ; les jets Ja sont inclinés chacun d'un angle de 30° par rapport à la verticale et sortent de la tête de distribution (9) dont le diamètre est de 2 mm ; la solution d'amorçage est introduite avec un débit de 20 kg/h suivant le jet axial vertical Jb émergeant de la tête de distribution (11) dont le diamètre est de 1 mm.

La distance parcourue par les jets Ja entre la sortie des têtes de distribution (9) et le point d'impact (I) est de 30 mm et celle parcourue par le jet Jb entre la sortie du tube (11) et le point d'impact (I) est de 40 mm.

L'enceinte tubulaire (17) associée à l'élément porte-buses (1) forme le réacteur de polymérisation dans lequel la pression est maintenue à 3,5 bars absolus d'azote et la température à 20°C.

Au point d'impact (I), la concentration en MMA est de 7,35 mole/l et la concentration en amorceur, de 1,22 x $10^{-2}$ mole/l. La durée de micromélange est d'environ 5 ms. La polymérisation du MMA a lieu au sein du jet résultant Jr qui parcourt une distance d'environ 500 mm jusqu'au fond conique de l'enceinte (17), où la solution de PMMA, qui contient 51 % en poids d'extrait sec, est récupérée.

Le PMMA a une $\overline{Mn}$ de 32600 g/mole.

*Exemple 3* :

**Synthèse en continu d'un copolymère séquencé polybutadiène-PMMA.**

L'exemple montre que, avec le dispositif selon l'invention, on peut préparer un copolymère séquencé.

On procède de manière générale comme aux exemples 1 et 2, excepté que la solution d'amorçage est constituée par une solution de polybutadiène vivant et que l'on utilise un dispositif de micromélange et de réaction capable de produire :

- quatre jets latéraux Ja de MMA pur émergeant de têtes de distribution (9) de 2 mm de diamètre, les jets Ja étant chacun inclinés d'un angle de 45° par rapport à la verticale, et
- un jet axial vertical Jb de solution d'amorçage (polybutadiène vivant) émergeant d'une tête de distribution (11) de 1,5 mm de diamètre.

Pour préparer la solution d'amorçage, on utilise un réacteur batch sous atmosphère inerte; on y introduit 12,8 kg de toluène purifié que l'on chauffe à 50°C, puis on ajoute 30,2 g BuLi (1,3 M dans l'hexane) comme amorceur. Ensuite, on ajoute 3,2 kg de butadiène tout en suivant l'exothermicité et la variation de pression ; on refroidit à - 15°C, puis on ajoute une solution de D P E et d'alcoolate $CH_3—O—CH_2CH_2—OLi$ obtenue en faisant réagir 27,1 g de méthoxy-2-éthanol avec 222,2 ml de BuLi (1,6 M dans l'hexane) et 25,6 g de DPE et 2,8 kg de toluène. On obtient ainsi une solution d'amorçage contenant du polybutadiène vivant de $\overline{Mn}$ = 41 100 g/mole que l'on stocke à - 20°C dans un stockeur C2, d'une capacité de 40 l.

Un stockeur C1 contient une solution de 21 kg de MMA dans 35,9 kg de toluène à - 29°C.

On vise une composition de copolypère Polybutadiène 60 % - PMMA 40 % en poids. L'extrait prévu pour le copolymère est de 9,4 %.

La solution de MMA et la solution d'amorçage (polybutadiène vivant) contenues dans les stockeurs respectivement C1 et C2 sont pompés, puis les flux sont injectés dans le dispositif de micromélange dont les caractéristiques ont été indiquées ci-dessus, le débit total de la solution de MMA étant de 80 kg/h (soit 20 kg/h dans chaque jet) et le débit de la solution d'amorçage, de 32,5 kg/h.

La distance parcourue par les jets Ja entre la sortie des têtes de distribution (9) et le point d'impact (I) est de 30 mm ; et celle parcourue par le jet Jb entre la sortie du tube (11) et le point d'impact (I) est de 40 mm.

L'enceinte tubulaire (17) associée à l'élément porte-buses (1) forme le réacteur de copolymérisation dans lequel la pression est maintenue à 1 bar absolu d'azote et la température à 20°C.

La copolymérisation a lieu au sein du jet résultant Jr qui parcourt une distance d'environ 500 mm jusqu'au fond de l'enceinte (17), où la solution de copolymère séquencé polybutadiène - PMMA, qui contient 8,7 % en poids d'extrait sec, est récupérée.

Le copolymère Polybutadiène - PMMA présente une $\overline{Mn}$ de 68700 g/mole. Les teneurs en Polybutadiène et PMMA déterminées par RMN du proton sont, respectivement, de 60 % et 40 %.

## Revendications

1. Procédé pour préparer en continu des homopolymères ou des copolymères par micromélange par impact de jets libres de fluides formés (1) de monomère(s) et (2) d'un système d'amorçage **caractérisé en ce que** l'on micromélange lesdits fluides (1) et (2) et l'on récupère le mélange de ces fluides sous forme d'un jet résultant Jr, issu du point d'impact (I), le micromélange étant obtenu :

    a) en formant au moins un groupe d'au moins deux jets Ja desdits fluides identiques ou différents, concourant au point d'impact (I), les jets Ja d'un même groupe étant tous de géométrie identique, leurs axes étant disposés de telle sorte que leurs projections sur un plan perpendiculaire à l'axe (A) du jet résultant Jr soient réparties angulairement de manière régulière et ces axes étant inclinés par rapport audit axe (A) d'un même angle $\alpha$ non nul d'au plus 90° ;
    b) en dirigeant, simultanément, sur le point d'impact (I) au moins un jet Jb d'un fluide différent d'au moins un des fluides desdits jets Ja pour former le jet résultant Jr, l'axe du ou des jets Jb étant inclinés par rapport à l'axe du jet résultant Jr d'un angle $\beta$ inférieur à l'angle $\alpha$ ; et
    c) en récupérant le mélange des fluides des jets Ja et Jb sous forme du jet résultant Jr constitué par les homopolymères ou copolymères.

2. Procédé selon la revendication 1, **caractérisé en ce que** l'on dirige sur le point d'impact (I) au moins deux jets Jb de fluides identiques ou différents, les jets Jb étant tous de géométrie identique, leurs axes étant disposés de telle sorte que leurs projections sur un plan perpendiculaire à l'axe (A) du jet Jr, soient réparties angulairement de manière régulière et étant inclinés par rapport audit axe (A) d'un même angle $\beta$.

3. Procédé selon l'une des revendications 1 et 2, **caractérisé en ce que** l'angle $\beta$ est compris entre 0 et 89° et de préférence il est de 0°.

4. Procédé selon l'une des revendications 1 à 3, **caractérisé en ce que** l'angle $\alpha$ est compris entre 10° et 60°.

5. Procédé selon l'une des revendications 1 à 4, **caractérisé en ce qu'**on dispose les jets Ja et Jb pour que le jet résultant Jr ait une direction verticale dirigée vers le bas.

6. Procédé selon l'une des revendications 1 à 5, **caractérisé en ce que** les jets Ja et Jb ont la forme de cylindre, cône ou nappe.

7. Procédé selon la revendication 6, **caractérisé en ce que** les jets Ja et Jb sont de forme cylindrique.

8. Procédé selon la revendication 7, **caractérisé en ce que** le diamètre de la section des jets Ja et Jb est de 0,01 mm à 100 mm, de préférence de 0,1 à 10 mm.

9. Procédé selon l'une des revendications 1 à 8, **caractérisé en ce que**, dans un même groupe de jets, Ja ou Jb,

les débits des jets sont identiques.

**10.** Procédé selon la revendication 9, **caractérisé en ce que** le ou les jet(s) Jb ont un débit différent de celui d'au moins un groupe de jets Ja.

**11.** Procédé selon la revendication 9 ou 10, **caractérisé en ce que** le débit des fluides de chacun des jets Ja et Jb est de 1g/h à 10 000 kg/h, en particulier de 1 kg/h à 1000 kg/h.

**12.** Procédé conforme à l'une des revendications 1 à 11, **caractérisé en ce que** les jets Ja sont des jets de monomère (s) pur(s) ou en milieu solvant et le ou les jet(s) Jb sont des jets d'un système d'amorçage.

**13.** Procédé selon l'une des revendications 1 à 12, **caractérisé en ce que** le jet Jr est utilisé comme l'un des jets Ja ou Jb pour réaliser un autre micromélange dans une étape en aval.

**14.** Procédé selon l'une des revendications 1 à 13, **caractérisé en ce qu'**il est réalisé dans une enceinte agencée pour la récupération du jet résultant Jr, ladite enceinte pouvant être soumise aux conditions de température et de pression requises pour le micromélange et la polymérisation du ou des monomère(s).

**15.** Procédé selon la revendication 14, **caractérisé en ce que** la pression régnant dans l'enceinte est de 1 mbar à 3000 bars, en particulier de 0,1 à 100 bars et la température, de - 100°C à 1500°C, en particulier de -80°C à + 200°C.

**16.** Procédé conforme à l'une quelconque des revendications 1 à 15, **caractérisé en ce que** les fluides sont constitués par au moins un monomère pur ou en milieu solvant polaire ou non polaire, et un système d'amorçage.

**17.** Procédé conforme à l'une des revendications 1 à 16, **caractérisé en ce que** les monomères sont des monomères acryliques, méthacryliques, vinylaromatiques, diéniques ou maléimides.

**18.** Procédé conforme à l'une quelconque des revendications 1 à 17 **caractérisé en ce que** les homopolymères et copolymères sont obtenus par polymérisation anionique.

**19.** Procédé conforme à la revendication 18, **caractérisé en ce que** le système d'amorçage comprend un amorceur monofonctionnel ou difonctionnel, éventuellement associé à un ligand.

**20.** Procédé conforme à la revendication 19, **caractérisé en ce que** l'on choisit, comme amorceur, un amorceur $R^1$ - M (I) dans laquelle :

- M désigne un métal alcalin ou alcalino-terreux, et
- $R^1$ désigne :
  - un radical alkyle à chaîne droite ou ramifiée, contenant 2 à 6 atomes de carbone, ou
  - un radical aryle à un ou plusieurs cycles, éventuellement substitué, ou
  - un radical alcényle en $C_2$-$C_6$ substitué par aryle ou alkylaryle, ou
  - un radical alkyle, linéaire ou ramifié, contenant 1 à 6 atomes de carbone, substitué par au moins un groupe phényle,

ou un amorceur monofonctionnel anionique des (méth)acrylates choisi parmi les α-lithioisobutyrates et les amidures,

ou bien un amorceur difonctionnel de formule (II)

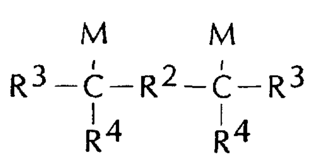

(II)

dans laquelle :

- M est tel que défini ci-dessus, et
- $R^2$ représente un radical organique divalent, aliphatique, cycloaliphatique, aromatique ou comportant au moins un groupement cycloaliphatique ou aromatique, $R^2$ pouvant comporter des substituants, et
- $R^3$ et $R^4$ représentent chacun indépendamment un radical organique monovalent, aliphatique, cycloaliphatique, aromatique ou comportant au moins un groupement cycloaliphatique ou aromatique, $R^3$ et $R^4$ pouvant comporter des substituants,

ou bien un amorceur monofonctionnel ou difonctionnel silylé.

**21.** Procédé conforme à la revendication 19 **caractérisé en ce que** l'on associe à l'amorceur au moins un ligand constitué par un alcoolate de métal alcalin de formule

$$R^5(OR^6)_nOM^1 \qquad (III)$$

$$M^1(OR^6)_nOM^1 \qquad (IV)$$

dans laquelle :

- $M^1$ représente un métal alcalin ;
- $R^5$ est un radical alkyle, linéaire ou ramifié, ayant de 1 à 6 atomes de carbone ou un radical arylalkyle dans lequel le reste alkyle est en $C_1$-$C_6$ ou un radical alkylaryle dans lequel le groupe alkyle a de 1 à 6 atomes de carbone ;
- - $R_6$ est un radical alkylène, linéaire ou ramifié, ayant de 2 à 4 atomes de carbone ;
- n est le nombre entier 1, 2 ou 3.

**22.** Procédé selon l'une des revendications 18 à 21 **caractérisé en ce que** la durée de la réaction de polymérisation dans le jet Jr est d'au moins 0,001 s, en particulier de 0,005 s à 10 s.

**23.** Dispositif pour la mise en oeuvre du procédé tel que défini à l'une des revendications 1 à 22, **caractérisé en ce qu'**il comprend :

a) des moyens pour former au moins un groupe d'au moins deux jets Ja de fluides identiques ou différents, concourant en un point d'impact (I), les jets Ja d'un même groupe ayant tous la même géométrie, leurs axes étant disposés de telle sorte que leurs projections sur un plan perpendiculaire à l'axe (A) du jet résultant Jr soient réparties angulairement de manière régulière et étant inclinés par rapport audit axe (A) d'un même angle $\alpha$ non nul d'au plus 90° ;
b) des moyens pour diriger sur le point d'impact (I) au moins un jet Jb d'un fluide différent d'au moins un des fluides desdits jets Ja pour former un jet résultant Jr, l'axe du ou des jets Jb étant incliné(s) par rapport à l'axe (A) d'un angle $\beta$ inférieur à l'angle $\alpha$, et
c) des moyens pour récupérer le mélange des fluides des jets Ja et Jb sous forme du jet résultant Jr.

**24.** Dispositif selon la revendication 23, **caractérisé en ce que** les moyens pour former les jets Ja et Jb comprennent un porte-buses (1) portant autant de buses (8, 11) qu'il y a de jets Ja et Jb, lesdites buses étant raccordées, à l'entrée, à des tubulures d'arrivée de fluide et étant disposées et orientées pour permettre, à leur sortie, la formation des jets libres Ja et Jb et leur point d'impact (I) et des moyens pour assurer les débits nécessaires des jets Ja et Jb et **en ce que** les moyens pour récupérer le mélange comprennent une enceinte (17) associée au porte-buses (1).

**25.** Dispositif selon la revendication 24 **caractérisé en ce que** les buses (8, 11) sont amovibles pour permettre leur échange par des buses de géométrie différente.

**26.** Dispositif selon l'une des revendications 24 à 25, **caractérisé en ce que** les buses (8, 11) sont des tubes de diamètre variable ou dont l'extrémité de sortie (11a) est de diamètre intérieur variable, ou sur lesquels peuvent s'adapter des têtes de distribution (9) de diamètre de sortie variable.

**27.** Dispositif selon l'une des revendications 24 à 26 **caractérisé en ce que** l'enceinte (17) forme avec le porte-buses

(1) un réacteur comportant des moyens de réglage de la température et de la pression au sein de celui-ci.

**28.** Dispositif selon l'une des revendications 24 à 27 **caractérisé en ce que** l'enceinte (17) est cylindrique avec un fond permettant la récupération du jet Jr.

**29.** Dispositif selon l'une des revendications 24 à 28, **caractérisé en ce qu'**il comprend un premier module de micromélange formé d'un premier porte-buses (1) et d'une première enceinte (17) et un deuxième module de micromélange formé d'un second porte-buses (101) associé à une seconde enceinte (117), le second porte-buses (101) comportant un orifice (110) permettant le passage du jet Jr résultant du micromélange dans le premier module, ce jet Jr servant de jet Jb pour le micromélange dans le deuxième module.

**Patentansprüche**

**1.** Verfahren zur kontinuierlichen Herstellung von Homopolymeren oder Copolymeren durch Mikrovermischen durch Aufeinanderprallen freier Strahlen von Fluiden, die gebildet sind aus (1) einem oder mehreren Monomeren und (2) einem Initiatorsystem, **dadurch gekennzeichnet, daß** die Fluide (1) und (2) mikrovermischt werden und daß das Gemisch dieser Fluide in Form eines resultierenden Strahls Jr erhalten wird, der am Aufprallpunkt (I) seinen Ausgangspunkt hat, wobei das Mikrogemisch erhalten wird

a) indem mindestens eine Gruppe von mindestens zwei Strahlen Ja dieser identischen oder verschiedenen Fluide gebildet wird, die am Aufprallpunkt (I) aufeinander treffen, wobei die Strahlen Ja einer einzelnen Gruppe alle die gleiche Geometrie aufweisen, ihre Achsen so angeordnet sind, daß ihre Projektionen auf eine Ebene senkrecht zur Achse (A) des resultierenden Strahls Jr eine regelmäßige Winkelverteilung aufweisen und diese Achsen, bezogen auf die Achse (A), um einen gleichen, von Null verschiedenen und höchstens 90 ° betragenden Winkel $\alpha$ geneigt sind;
b) indem gleichzeitig mindestens ein Strahl Jb eines Fluids, das von mindestens einem der Fluide der Strahlen Ja verschieden ist, auf den Aufprallpunkt (I) gelenkt wird, um den resultierenden Strahl Jr zu bilden, wobei die Achse des Strahls Jb oder der Strahlen Jb, bezogen auf die Achse des resultierenden Strahls Jr, um einen Winkel $\beta$ geneigt ist, der kleiner als der Winkel $\alpha$ ist; und
c) indem das Gemisch der Fluide der Strahlen Ja und Jb in Form des resultierenden Strahls Jr gewonnen wird, der aus den Homopolymeren oder Copolymeren besteht.

**2.** Verfahren nach Anspruch 1, **dadurch gekennzeichnet, daß** mindestens zwei Strahlen Jb identischer oder verschiedener Fluide auf den Aufprallpunkt (I) gelenkt werden, wobei die Strahlen Jb alle die gleiche Geometrie aufweisen, ihre Achsen so angeordnet sind, daß ihre Projektionen auf eine Ebene senkrecht zur Achse (A) des Strahls Jr eine regelmäßige Winkelverteilung aufweisen und, bezogen auf die Achse (A), um einen gleichen Winkel $\beta$ geneigt sind.

**3.** Verfahren nach einem der Ansprüche 1 und 2, **dadurch gekennzeichnet, daß** der Winkel $\beta$ im Bereich von 0 bis 89° liegt und vorzugsweise 0° ist.

**4.** Verfahren nach einem der Ansprüche 1 bis 3, **dadurch gekennzeichnet, daß** der Winkel $\alpha$ im Bereich von 10° bis 60° liegt.

**5.** Verfahren nach einem der Ansprüche 1 bis 4, **dadurch gekennzeichnet, daß** die Strahlen Ja und Jb so angeordnet werden, daß der resultierende Strahl Jr eine vertikale, nach unten zeigende Richtung erhält.

**6.** Verfahren nach einem der Ansprüche 1 bis 5, **dadurch gekennzeichnet, daß** die Strahlen Ja und Jb zylindrisch, kegelförmig oder mantelförmig sind.

**7.** Verfahren nach Anspruch 6, **dadurch gekennzeichnet, daß** die Strahlen Ja und Jb eine zylindrische Form aufweisen.

**8.** Verfahren nach Anspruch 7, **dadurch gekennzeichnet, daß** der Durchmesser des Querschnitts der Strahlen Ja und Jb im Bereich von 0,01 bis 100 mm und vorzugsweise 0,1 bis 10 mm liegt.

**9.** Verfahren nach einem der Ansprüche 1 bis 8, **dadurch gekennzeichnet, daß** in einer einzelnen Gruppe von

Strahlen, Ja oder Jb, die Durchsätze der Strahlen identisch sind.

**10.** Verfahren nach Anspruch 9, **dadurch gekennzeichnet, daß** der oder die Strahlen Jb einen Durchsatz haben, der verschieden ist vom Durchsatz mindestens einer Gruppe von Strahlen Ja.

**11.** Verfahren nach Anspruch 9 oder 10, **dadurch gekennzeichnet, daß** der Fluiddurchsatz jedes der Strahlen Ja und Jb 1 g/h bis 10000 kg/h und vor allem 1 bis 1000 kg/h beträgt.

**12.** Verfahren nach einem der Ansprüche 1 bis 11, **dadurch gekennzeichnet, daß** die Strahlen Ja Strahlen aus einem oder mehreren reinen Monomeren oder Strahlen von einem oder mehreren Monomeren in einem Lösemittelmedium sind und daß der oder die Strahlen Jb Strahlen aus einem Initiatorsystem sind.

**13.** Verfahren nach einem der Ansprüche 1 bis 12, **dadurch gekennzeichnet, daß** der Strahl Jr als Strahl Ja oder Jb verwendet wird, um in einem stromabwärts durchgeführten Schritt eine weitere Mikrovermischung durchzuführen.

**14.** Verfahren nach einem der Ansprüche 1 bis 13, **dadurch gekennzeichnet, daß** es in einem Behälter durchgeführt wird, der für die Aufnahme des resultierenden Strahls Jr ausgebildet ist, wobei in dem Behälter die für die Mikrovermischung und die Polymerisation des oder der Monomere erforderlichen Temperatur- und Druckbedingungen eingestellt werden können.

**15.** Verfahren nach Anspruch 14, **dadurch gekennzeichnet, daß** der in dem Behälter herrschende Druck im Bereich von 1 mbar bis 3000 bar und vor allem 0,1 bis 100 bar und die Temperatur im Bereich von -100 bis 1500 °C und vor allem -80 bis +200 °C liegt.

**16.** Verfahren nach einem der Ansprüche 1 bis 15, **dadurch gekennzeichnet, daß** die Fluide aus mindestens einem reinen Monomer oder aus mindestens einem Monomer in einem polaren oder unpolaren Lösemittel und einem Initiatorsystem bestehen.

**17.** Verfahren nach einem der Ansprüche 1 bis 16, **dadurch gekennzeichnet, daß** die Monomere Acryl-, Methacryl-Monomere, vinylaromatische Monomere, Dien- oder Maleimid-Monomere sind.

**18.** Verfahren nach einem der Ansprüche 1 bis 17, **dadurch gekennzeichnet, daß** die Homopolymere und Copolymere durch anionische Polymerisation erhalten werden.

**19.** Verfahren nach Anspruch 18, **dadurch gekennzeichnet, daß** das Initiatorsystem einen monofunktionellen oder difunktionellen Initiator, der gegebenenfalls mit einem Liganden kombiniert ist, enthält.

**20.** Verfahren nach Anspruch 19, **dadurch gekennzeichnet, daß** als Initiator ausgewählt wird:

ein Initiator der Formel $R^1$-M (I), in der bedeuten:

- M ein Alkali- oder Erdalkalimetall und
- die Gruppe $R^1$
    - eine geradkettige oder verzweigte Alkylgruppe, die 2 bis 6 Kohlenstoffatome enthält, oder
    - eine Arylgruppe aus einem oder mehreren Ringen, die gegebenenfalls substituiert ist, oder
    - eine $C_2$-$C_6$-Alkenylgruppe, die mit Aryl oder Alkylaryl substituiert ist, oder
    - eine geradkettige oder verzweigte Alkylgruppe, die 1 bis 6 Kohlenstoffatome enthält, die mit mindestens einer Phenylgruppe substituiert ist,

oder ein anionischer monofunktioneller Initiator der (Meth)acrylate, der unter den $\alpha$-Lithiumisobutyraten und den Amiden ausgewählt wird,

oder ein difunktioneller Initiator der Formel (II)

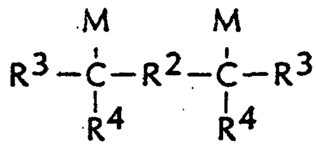

(II),

in der bedeuten:

- M dasselbe wie oben definiert, und
- $R^2$ eine zweiwertige organische aliphatische, cycloaliphatische, aromatische Gruppe oder eine Gruppe, die mindestens eine cycloaliphatische oder aromatische Gruppe enthält, wobei $R^2$ Substituenten tragen kann,
- $R^3$ und $R^4$ unabhängig voneinander eine einwertige organische aliphatische, cycloaliphatische, aromatische Gruppe oder eine Gruppe, die mindestens eine cycloaliphatische oder aromatische Gruppe enthält, wobei $R^3$ und $R^4$ Substituenten tragen können,

oder ein silylierter monofunktioneller oder difunktioneller Initiator.

**21.** Verfahren nach Anspruch 19, **dadurch gekennzeichnet, daß** der Initiator mit mindestens einem Liganden kombiniert wird, der aus einem Alkalimetallalkoholat der Formel

$$R^5(OR^6)_nOM^1 \qquad \text{(III)}$$

$$M^1(OR^6)_nOM^1 \qquad \text{(IV)}$$

besteht, worin bedeuten:

- $M^1$ ein Alkalimetall,
- $R^5$ eine geradkettige oder verzweigte Alkylgruppe, die 1 bis 6 Kohlenstoffatome aufweist, oder eine Arylalkylgruppe, in der die Alkylgruppe 1 bis 6 Kohlenstoffatome aufweist, oder eine Alkylarylgruppe, in der die Alkylgruppe 1 bis 6 Kohlenstoffatome aufweist;
- $R^6$ eine geradkettige oder verzweigte Alkylengruppe, die 2 bis 4 Kohlenstoffatome aufweist,
- n die ganze Zahl 1, 2 oder 3.

**22.** Verfahren nach einem der Ansprüche 18 bis 21, **dadurch gekennzeichnet, daß** der Zeitraum für die Polymerisationsreaktion in dem Strahl Jr mindestens 0,001 s und vor allem 0,005 bis 10 s beträgt.

**23.** Vorrichtung zur Durchführung des Verfahrens, das wie in einem der Ansprüche 1 bis 22 definiert ist, **dadurch gekennzeichnet, daß** es umfaßt:

a) Mittel zum Ausbilden mindestens einer Gruppe von mindestens zwei Strahlen Ja identischer oder verschiedener Fluide, die an einem Aufprallpunkt (I) aufeinander treffen, wobei die Strahlen Ja einer einzelnen Gruppe alle die gleiche Geometrie aufweisen, ihre Achsen so angeordnet sind, daß ihre Projektionen auf eine Ebene senkrecht zur Achse (A) des resultierenden Strahls Jr eine regelmäßige Winkelverteilung aufweisen und diese Achsen, bezogen auf die Achse (A), um einen gleichen, von Null verschiedenen und höchstens 90° betragenden Winkel $\alpha$ geneigt sind;
b) Mittel zum Lenken mindestens eines Strahl Jb eines Fluids, das von mindestens einem der Fluide der Strahlen Ja verschieden ist, auf den Aufprallpunkt (I), um einen resultierenden Strahl Jr zu bilden, wobei die Achse des Strahls Jb oder der Strahlen Jb, bezogen auf die Achse (A), um einen Winkel $\beta$ geneigt ist, der kleiner als der Winkel $\alpha$ ist; und
c) Mittel zum Gewinnen des Gemischs der Fluide der Strahlen Ja und Jb in Form des resultierenden Strahls Jr.

**24.** Vorrichtung nach Anspruch 23, **dadurch gekennzeichnet, daß** die Mittel zur Ausbildung der Strahlen Ja und Jb eine Düsenhalterung (1), die genauso viele Düsen (8, 11) trägt wie es Strahlen Ja und Jb gibt, wobei die Düsen

an ihrer Eintrittsöffnung mit Stutzen für die Fluidzufuhr verbunden sind und so angeordnet und orientiert sind, daß sie an ihrer Austrittsöffnung die Bildung freier Strahlen Ja und Jb und des ihres Aufprallpunkts (I) ermöglichen, und Mittel aurweisen, die die erforderlichen Durchsätze der Strahlen Ja und Jb gewährleisten, und daß die Mittel zum Gewinnen des Gemischs einen Behälter (17) umfassen, der mit der Düsenhalterung (1) verbunden ist.

**25.** Vorrichtung nach Anspruch 24 **dadurch gekennzeichnet, daß** die Düsen (8, 11) abnehmbar sind, damit sie gegen Düsen mit einer anderen Geometrie ausgetauscht werden können.

**26.** Vorrichtung nach einem der Ansprüche 24 und 25, **dadurch gekennzeichnet, daß** die Düsen (8, 11) Rohre mit einem variablen Durchmesser sind oder deren Austrittsende (11a) einen variablen Innendurchmesser aufweist oder auf die Verteilerköpfe (9) mit einem variablen Durchmesser der Austrittsöffnung aufgesetzt werden können.

**27.** Vorrichtung nach einem der Ansprüche 24 bis 26, **dadurch gekennzeichnet, daß** der Behälter (17) mit der Düsenhalterung (1) einen Reaktor bildet, der Mittel zur Regelung der Temperatur und des Drucks in dem Behälter aufweist.

**28.** Vorrichtung nach einem der Ansprüche 24 bis 27, **dadurch gekennzeichnet, daß** der Behälter (17) zylindrisch ist mit einem Boden, der die Gewinnung des Strahls Jr ermöglicht.

**29.** Vorrichtung nach einem der Ansprüche 24 bis 28, **dadurch gekennzeichnet, daß** sie ein erstes Modul zur Mikrovermischung, das aus einer ersten Düsenhalterung (1) und einem ersten Behälter (17) besteht, und ein zweites Modul zur Mikrovermischung umfaßt, das aus einer zweiten Düsenhalterung (101) in Kombination mit einem zweiten Behälter (117) besteht, wobei die zweite Düsenhalterung eine Öffnung (110) aufweist, die den Durchtritt des beim Mikrovermischen im ersten Modul resultierenden Strahls Jr ermöglicht, wobei dieser Strahl Jr als Strahl Jb für das Mikrovermischen in dem zweiten Modul dient.

## Claims

**1.** Process for the continuous preparation of homopolymers or copolymers by free-impinging-jet micromixing of fluids formed (1) of monomer(s) and (2) of an initiator system, **characterized in that** the said fluids (1) and (2) are micromixed and the mixture of these fluids is recovered in the form of a resultant jet Jr, originating from the point of impingement (I), the micromixing being obtained by:

a) forming at least one group of at least two jets Ja of the said identical or different fluids, these jets coinciding at the point of impingement (I), the jets Ja of the same group all being of identical geometry, their axes being arranged such that their projections on a plane perpendicular to the axis (A) of the resultant jet Jr are distributed angularly in a uniform manner and these axes being inclined relative to the said axis (A) by the same non-zero angle $\alpha$ of not more than 90°;
b) simultaneously directing at the point of impingement (I) at least one jet Jb of a fluid which is different from at least one of the fluids of the said jets Ja for forming the resultant jet Jr, the axis of the jet(s) Jb being inclined relative to the axis of the resultant jet Jr by an angle $\beta$ which is less than the angle $\alpha$; and
c) recovering the mixture of the fluids in the jets Ja and Jb in the form of the resultant jet Jr consisting of the homopolymers or copolymers.

**2.** Process according to Claim 1, **characterized in that** at least two jets Jb of identical or different fluids are directed towards the point of impingement (I), the jets Jb all being of identical geometry, their axes being arranged such that their projections along a plane perpendicular to the axis (A) of the jet Jr are distributed angularly in a uniform manner and being inclined by the same angle $\beta$ relative to the said axis (A).

**3.** Process according to either of Claims 1 and 2, **characterized in that** the angle $\beta$ is between 0 and 89° and is preferably 0°.

**4.** Process according to one of Claims 1 to 3, **characterized in that** the angle $\alpha$ is between 10° and 60°.

**5.** Process according to one of Claims 1 to 4, **characterized in that** the jets Ja and Jb are arranged such that the resultant jet Jr has a vertical downward direction.

6. Process according to one of Claims 1 to 5, **characterized in that** the jets Ja and Jb have a cylindrical, conical or sheet shape.

7. Process according to Claim 6, **characterized in that** the jets Ja and Jb are of cylindrical shape.

8. Process according to Claim 7, **characterized in that** the cross-sectional diameter of the jets Ja and Jb is from 0.01 mm to 100 mm, preferably from 0.1 to 10 mm.

9. Process according to one of Claims 1 to 8, **characterized in that**, in the same group of jets, Ja or Jb, the flow rates of the jets are identical.

10. Process according to Claim 9, **characterized in that** the jet(s) Jb has (have) a different flow rate from that of at least one group of jets Ja.

11. Process according to Claim 9 or 10, **characterized in that** the flow rate of the fluids in each of the jets Ja and Jb is from 1 g/h to 10,000 kg/h, in particular from 1 kg/h to 1000 kg/h.

12. Process according to one of Claims 1 to 11, **characterized in that** the jets Ja are jets of monomer(s) which is (are) pure or in solvent medium and the jet(s) Jb are jets of an initiator system.

13. Process according to one of Claims 1 to 12, **characterized in that** the jet Jr is used as one of the jets Ja or Jb in order to prepare another micromixture in a step downstream.

14. Process according to one of Claims 1 to 13, **characterized in that** it is carried out in a chamber equipped for recovery of the resultant jet Jr, the said chamber possibly being subjected to the temperature and pressure conditions required for the micromixing and the polymerization of the monomer or monomers.

15. Process according to Claim 14, **characterized in that** the pressure prevailing in the chamber is from 1 mbar to 3000 bar, in particular from 0.1 to 100 bar, and the temperature is from -100°C to 1500°C, in particular from -80°C to +200°C.

16. Process according to any one of Claims 1 to 15, **characterized in that** the fluids consist of at least one monomer which is pure or in polar or non-polar, solvent medium, and an initiator system.

17. Process according to one of Claims 1 to 16, **characterized in that** the monomers are acrylic, methacrylic, vinylaromatic, diene or maleimide monomers.

18. Process according to any one of Claims 1 to 17, **characterized in that** the homopolymers and copolymers are obtained by anionic polymerization.

19. Process according to Claim 18, **characterized in that** the initiator system comprises a monofunctional or difunctional initiator, optionally combined with a ligand.

20. Process according to Claim 19, **characterized in that** an initiator $R^1$-M (I) is chosen as initiator, in which:

- M denotes an alkali metal or alkaline-earth metal; and

  - $R^1$ denotes:

    - an alkyl radical with a straight or branched chain, containing 2 to 6 carbon atoms; or
    - an aryl radical with one or more rings, optionally substituted; or
    - a $C_2$-$C_6$ alkenyl radical substituted with aryl or alkylaryl; or
    - a linear or branched alkyl radical containing 1 to 6 carbon atoms, substituted with at least one phenyl group,

or an anionic monofunctional initiator for (meth)acrylates chosen from α-lithioisobutyrates and amides,
or alternatively a difunctional initiator of formula (II):

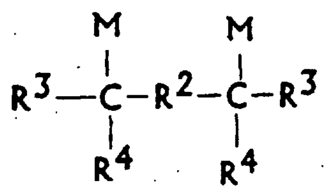

(II)

in which:

- M is as defined above; and
- $R^2$ represents an aliphatic, cycloaliphatic or aromatic divalent organic radical or an organic radical containing at least one cycloaliphatic or aromatic group, it being possible for $R^2$ to contain substituents, and
- $R^3$ and $R^4$ each independently represent an aliphatic, cycloaliphatic or aromatic monovalent organic radical or an organic radical containing at least one cycloaliphatic or aromatic group, it being possible for $R^3$ and $R^4$ to contain substituents,

or alternatively a monofunctional or difunctional silylated initiator.

**21.** Process according to Claim 19, **characterized in that** the initiator is combined with at least one ligand consisting of an alkali metal alkoxide of formula

$$R^5(OR^6)_nOM^1 \qquad (III)$$

$$M^1(OR^6)_nOM^1 \qquad (IV)$$

in which:

- $M^1$ represents an alkali metal;
- $R^5$ is a linear or branched alkyl radical having from 1 to 6 carbon atoms or an arylalkyl radical in which the alkyl residue is $C_1$-$C_6$, or an alkylaryl radical in which the alkyl group has from 1 to 6 carbon atoms;
- $R^6$ is a linear or branched alkylene radical having from 2 to 4 carbon atoms;
- n is the integer 1, 2 or 3.

**22.** Process according to one of Claims 18 to 21, **characterized in that** the duration of the polymerization reaction in the jet Jr is at least 0.001 s, in particular from 0.005 s to 10 s.

**23.** Device for carrying out the process as defined in one of Claims 1 to 22, **characterized in that** it comprises:

a) means for forming at least one group of at least two jets Ja of identical or different fluids, these jets coinciding at a point of impingement (I), the jets Ja of the same group all being of identical geometry, their axes being arranged such that their projections on a plane perpendicular to the axis (A) of the resultant jet Jr are distributed angularly in a uniform manner and being inclined relative to the said axis (A) by the same non-zero angle $\alpha$ of not more than 90°;
b) means for directing at the point of impingement (I) at least one jet Jb of a fluid which is different from at least one of the fluids of the said jets Ja for forming a resultant jet Jr, the axis of the jet(s) Jb being inclined relative to the axis (A) by an angle $\beta$ which is less than the angle $\alpha$, and
c) means for recovering the mixture of the fluids in the jets Ja and Jb in the form of the resultant jet Jr.

**24.** Device according to Claim 23, **characterized in that** the means for forming the jets Ja and Jb comprise a nozzle holder (1) which holds as many nozzles (8, 11). as there are jets Ja and Jb, the said nozzles being connected, at the inlet, to fluid inlet tubes and being arranged and oriented to allow, at their outlet, the formation of the free jets Ja and Jb and their point of impingement (I) and means for providing the necessary flow rates of the jets Ja and Jb, and **in that** the means for recovering the mixture comprise a chamber (17) connected to the nozzle holder (1).

**25.** Device according to Claim 24, **characterized in that** the nozzles (8, 11) are removable to allow them to be exchanged with nozzles of different geometry.

**26.** Device according to either of Claims 24 and 25, **characterized in that** the nozzles (8, 11) are tubes of variable diameter or whose outlet end (11a) is of variable inside diameter, or onto which distribution heads (9) of variable outlet diameter can be fitted.

**27.** Device according to one of Claims 24 to 26, **characterized in that** the chamber (17) forms, with the nozzle holder (1), a reactor containing means for adjusting the temperature and pressure inside it.

**28.** Device according to one of Claims 24 to 27, **characterized in that** the chamber (17) is cylindrical with a base which allows recovery of the jet Jr.

**29.** Device according to one of Claims 24 to 28, **characterized in that** it comprises a first micromixing module formed of a first nozzle holder (1) and a first chamber (17), and a second micromixing module formed of a second nozzle holder (101) connected to a second chamber (117), the second nozzle holder (101) containing an orifice (110) which allows passage of the jet Jr resulting from the micromixing in the first module, this jet Jr being used as a jet Jb for the micromixing in the second module.

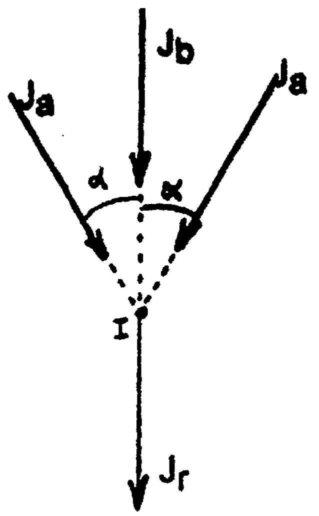


Fig. 1

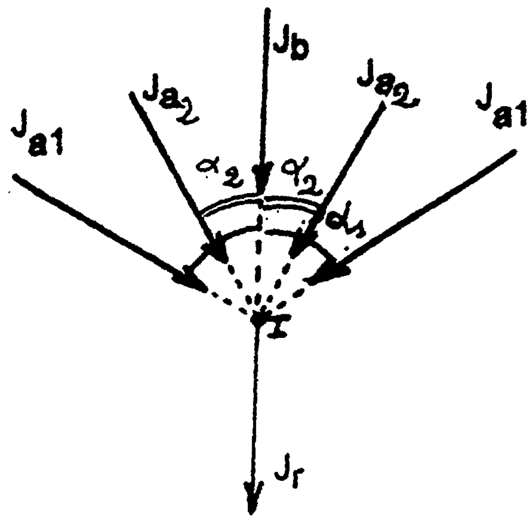


Fig. 2

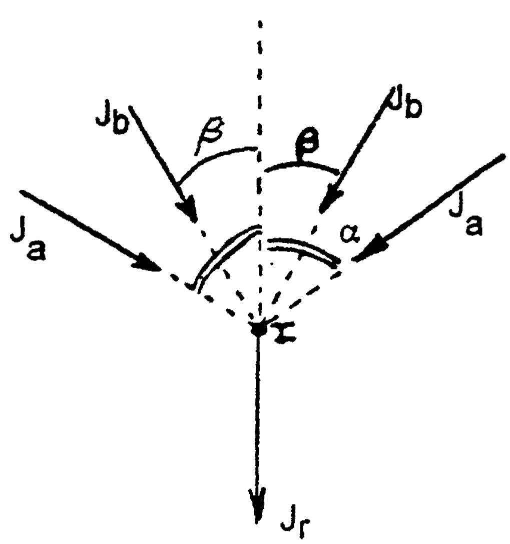


Fig. 3

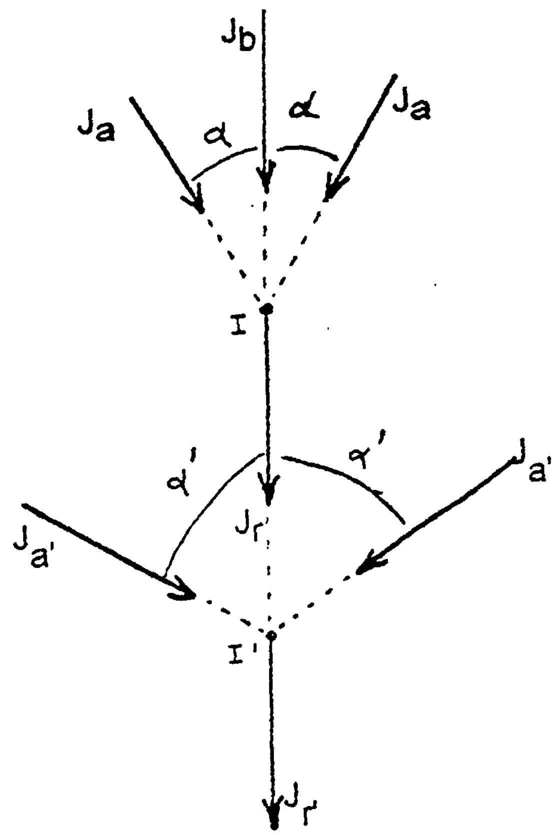


Fig. 4

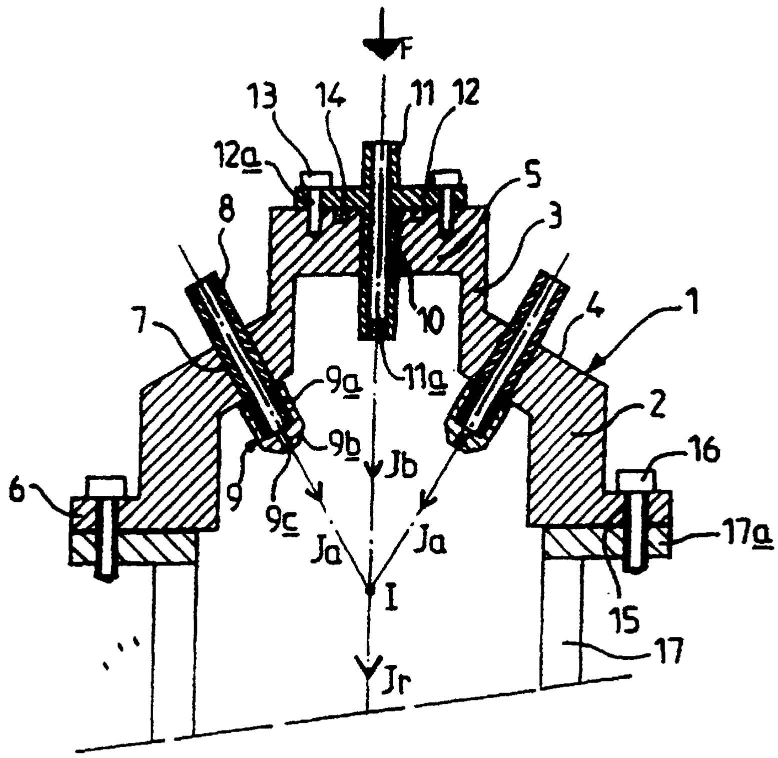
F
13
14
11
12
12a
5
8
3
10
1
4
7
11a
9a
2
9b
Jb
16
6
9
9c
Ja
Ja
17a
I
15
17
Jr

FIG. 5

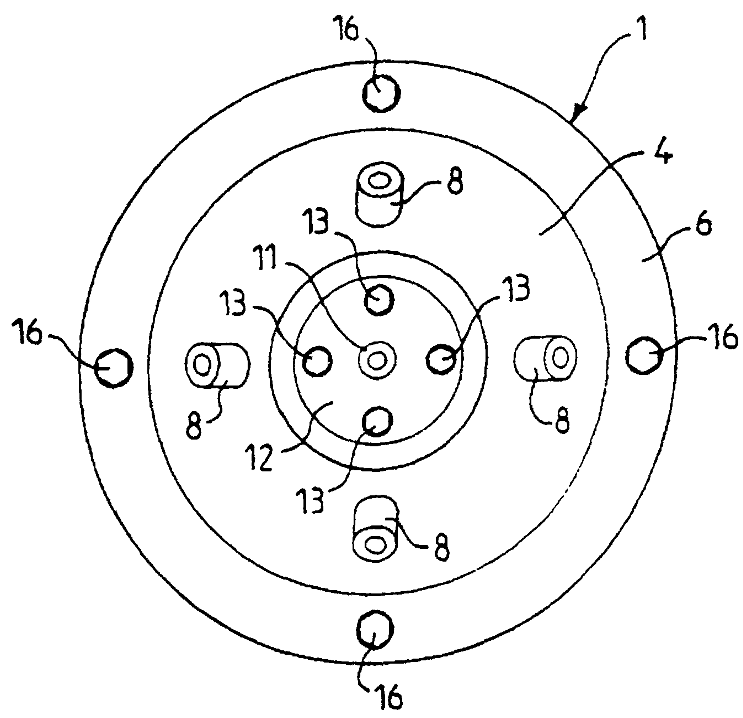
16
1
4
8
13
6
11
13
13
16
16
8
8
12
13
8
16

FIG. 6

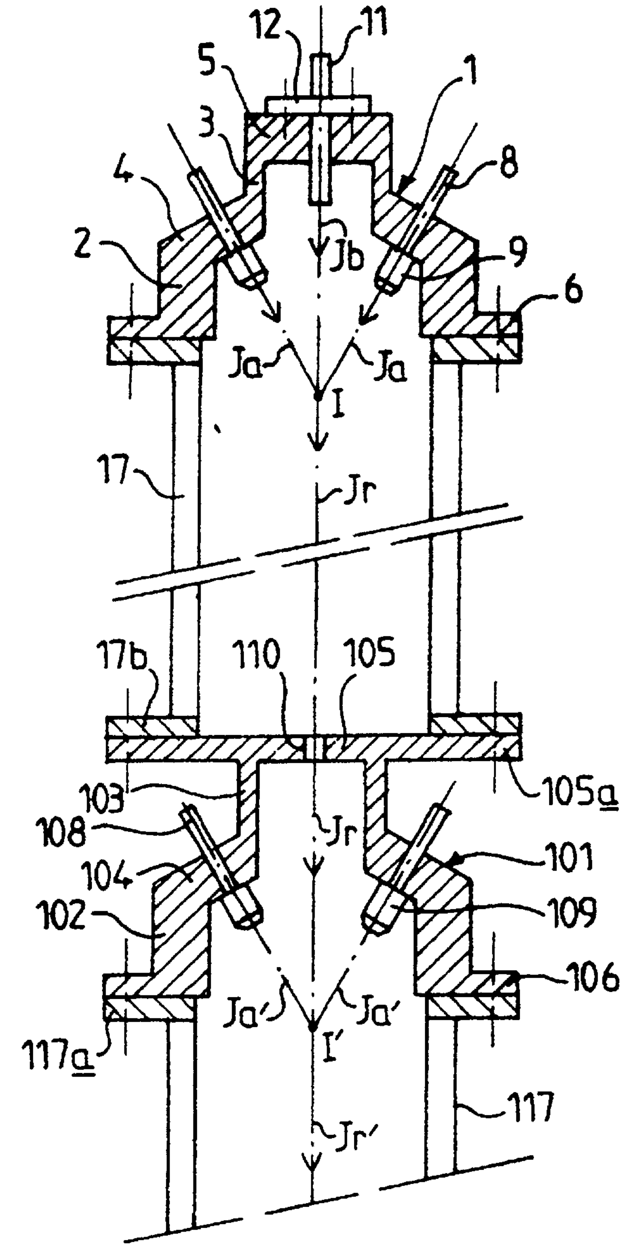

12
11
5
1
3
8
4
Jb
2
9
6
Ja
Ja
I
17
Jr
17b
110
105
105a
103
Jr
108
101
104
109
102
106
Ja'
Ja'
I'
117a
117
Jr'


FIG. 7